# EUROPÄISCHE PATENTSCHRIFT

(11) **EP 1 675 749 B1**
(45) Veröffentlichungstag und Bekanntmachung des Hinweises auf die Patenterteilung: **08.04.2009**
(21) Anmeldenummer: 04791180.5
(22) Anmeldetag: 08.10.2004
(51) Int. Cl.: B60P 7/08

(54) **BANDSPANNER UND ZUGEHÖRIGE SPANNBACKEN**
STRIP CLAMPING DEVICE AND ASSOCIATED CLAMPING JAWS
DISPOSITIF DE SERRAGE A BANDE ET MACHOIRES DE SERRAGE CORRESPONDANTES

(30) Priorität: 23.10.2003 DE 10349229
(43) Veröffentlichungstag der Anmeldung: 05.07.2006
(73) Patentinhaber: wolfcraft GmbH, 56746 Kempenich (DE)
(72) Erfinder: DEGEN, Klemens, 56745 Weibern (DE)
(74) Vertreter: Grundmann, Dirk
(86) Internationale Anmeldenummer: PCT/EP2004/052478
(87) Internationale Veröffentlichungsnummer: WO 2005/039923

(56) Entgegenhaltungen:
- DE-A1- 4 200 127
- DE-C- 181 133
- DE-U1- 20 219 239
- US-A- 1 395 553
- US-A- 3 762 696
- US-A- 5 282 706
- US-A- 5 313 721
- US-A- 6 007 053
- US-A1- 2003 059 269
- US-A1- 2003 145 434

## Beschreibung

Die Erfindung betrifft einen Bandspanner gemäß Gattungsbegriff des Anspruchs 1.

Ein derartigen Bandspanner wird von der US 6,007,053 A beschrieben. Ein offenes Gehäuse trägt dort einen Wickelkörper. Mit einem Treibhebel, dessen Treibklinke in die Verzahnung eines Sperrrades eingreift, kann der Wickelkörper gedreht werden. Eine Richtungsdrehsperre bewirkt eine dem Gehäuse zugeordnete Sperrklinke. Ein Band ist mit seinem Ende fest mit dem Wickelkörper verbunden. Der Wickelkörper besitzt einen Federspeicher, der beim Abziehen des Bandes von dem Wickelkörper gespannt wird.

Die gattungsgemäße US 5,282,706 A beschreibt einen ähnlich aufgebauten Bandspanner. Auch hier ist durch wiederholtes Schwenken eines Treibhebels in Bezug auf das Gehäuse der Wickelkörper drehbar.

Ein weiterer Bandspanner ist aus der DE 202 04955 U1 bekannt. Der Wickelkörper hat dort die Gestalt einer geschlitzten Welle. Durch den Diametralschlitz dieser Welle wird das Spannrad gezogen. Beim Drehen des Wickelkörpers wickelt sich das Band um den Wickelkörper auf, wobei das freie Ende des Bandes lose bleibt.

Aus der EP 0 730 932 B1 ist ein Bandspanner bekannt, bei dem das Band mittels eines doppelten Flaschenzuges gespannt werden kann. Die Spanneinrichtung besitzt eine Speicherscheibe, auf der das nicht benötigte Band aufwickelbar ist. Hierzu ist eine Kurbel vorgesehen.

Ausgehend von dem eingangs genannten Stand der Technik liegt der Erfindung die Aufgabe zugrunde, den gattungsgemäßen Bandspanner gebrauchsvorteilhaft weiterzubilden.

Gelöst wird die Aufgabe durch die in den Ansprüchen angegebene Erfindung, wobei im Wesentlichen darauf abgestellt ist, dass der Treibhebel und eine fest mit einem Spanneinrichtungsgehäuse verbundene Handhabe derart zangenartig einander zugeordnet sind, dass der Treibhebel zum Aufbringen der Spannkraft gegen die Kraft einer Rückstellfeder in Richtung auf die Handhabe zu verlagerbar ist. Der Wickelkörper weist einen in Aufwickelrichtung wirkenden Federspeicher auf und ist als Speicherspule ausgebildet, die im Wesentlichen die gesamte Länge des mit einem Ende fest mit dem Wickelkörper verbundenen Bandes aufnimmt. Ferner kann die Vorrichtung einen insbesondere der Handhabe zugeordneten Freigabehebel zum Lösen der Sperrklinke aufweisen. Der Treibhebel ist zum Aufbringen der Spannkraft gegen die Kraft einer Rückstellfeder auf die Handhabe zu verlagerbar. In der Ruhestellung kann die Treibklinke außer Eingriff der Sperrzähne liegen. Dann wird das Sperrrad nur von der Sperrklinke gesperrt. Wird die Sperrklinke gelöst, so ist die Kraft des Federspeichers in der Lage, bei in Ruhestellung liegendem Treibhebel das Band selbsttätig aufzuwickeln. Die in der Sperrstellung liegende Sperrklinke kann dieses Aufwickeln verhindern. Der Wickelkörper kann aus Kunststoff bestehen. Er kann in einem allseitig geschlossenen Gehäuse angeordnet sein, wobei das Gehäuse einen Durchtrittsschlitz für das Spannband und ggf. eine Arbeitsöffnung für die Treibklinke aufweist. Das Ende des Spannbandes, welches nicht fest mit dem Wickelkörper verbunden ist, kann mit einem Haken versehen sein. Dieser Haken kann am Gehäuse eingehakt werden. Das Sperrrad kann aus Metall, vorzugsweise Stahl, bestehen. Es hat eine ringförmige Gestalt. Es liegt formschlüssig in der Stirnwand des Wickelkörpers ein. Bevorzugt besitzt der Wickelkörper zwei Sperrräder, die jeweils in den beiden sich gegenüberliegenden Stirnwänden des Wickelkörpers formschlüssig einliegen. Der Treibhebel kann gabelförmige Arme aufweisen. Mit diesen kann der Treibhebel gehäuseaußenseitig am Gehäuse angelenkt sein. Die Anlenkachse entspricht dabei bevorzugt der Drehachse des Wickelkörpers.

Der Wickelkörper ist in der Lage, die gesamte Länge des Spannbandes aufzunehmen. Das Aufwickeln erfolgt automatisch, wenn die Treibklinke und die Sperrklinke aus dem Zahneingriff heraus verlagert sind. Durch Zug auf das Spannband kann es vom Wickelkörper wieder abgezogen werden. Beim Abziehen des Spannbandes vom Wickelkörper wird der Wickelkörper gedreht. Einhergehend mit dieser Drehung spannt sich eine in einem Hohlraum des Wickelkörpers angeordnete Spiralfeder. Wenn die Treibklinke in der Ruhestellung des Treibhebels außer Zahneingriff liegt, braucht zum Aufwickeln bzw. zum Herausziehen des Bandes lediglich der Freigabehebel betätigt werden, mit welchem die Sperrklinke außer Wirkung gebracht wird.

Ein Ausführungsbeispiel der Erfindung wird nachstehend anhand beigefügter Zeichnungen erläutert, wobei die Figuren 9-13 nicht Teil der Erfindung sind. Es zeigen:
- Fig. 1: den erfindungsgemäßen Bandspanner in der Draufsicht mit vier zugehörigen Spannbacken,
- Fig. 2: eine vergrößerte Darstellung des Bandspanners gemäß Fig. 1 in der Draufsicht mit abgenommenem Gehäusedeckel in der nicht betätigten Stellung, in welcher die Treibklinke 7 nicht im Zahneingriff, die Sperrklinke aber in Zahneingriff steht,
- Fig. 3: eine Darstellung gemäß Fig. 2 mit leicht verlagerten Treibhebel, so dass die Treibklinke in den Zahneingriff kommt,
- Fig. 4: eine Folgedarstellung zu Fig. 3 mit gegen die Handhabe 11 verlagertem Treibhebel 6,
- Fig. 5: eine Folgedarstellung zu Fig. 2 mit betätigten Freigabehebeln 12,

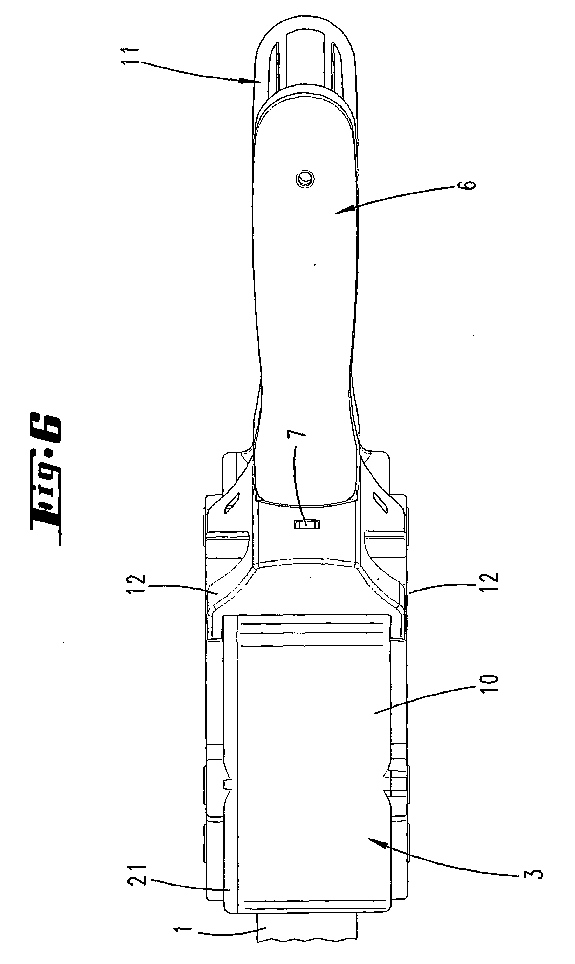

- Fig. 6: eine Seitenansicht Pfeil VI in Fig. 1,
- Fig. 7: eine vergrößerte Darstellung gemäß Fig. 1 mit einem im Bereich seiner Anlenkstelle aufgebrochenen Arm 18 des Treibhebel 6,

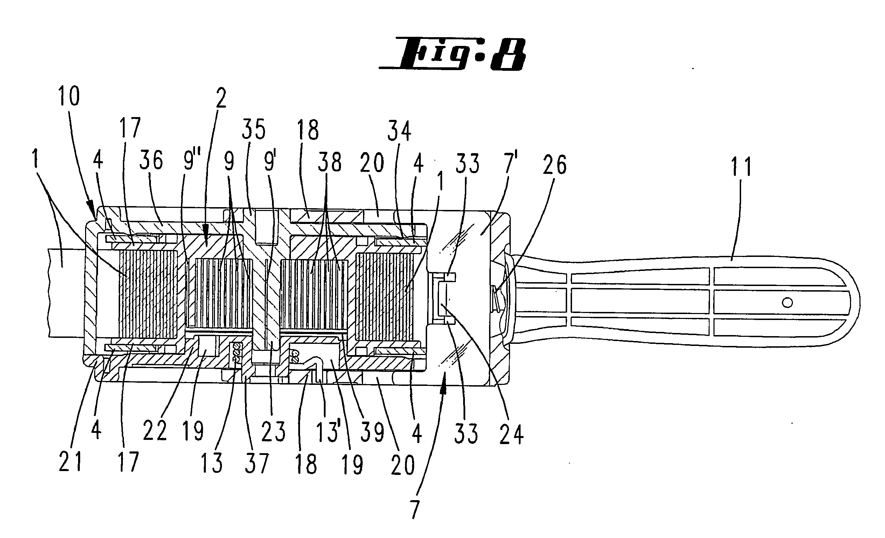

- Fig. 8: einen Schnitt gemäß der Linie VIII-VIII in Fig.1,
- Fig. 9: eine Spannbacke in der Seitenansicht in Ihrer 90° Stellung und strichpunktiert in einer stumpfwinkligen Verschwenktstellung,
- Fig. 10: eine Ansicht in Richtung des Pfeiles X in Fig. 9,
- Fig.11: eine Ansicht gemäß Pfeil XI in Fig. 9,
- Fig. 12: einen Schnitt gemäß der Linie XII-XII in Fig. 10 und
- Fig. 13: einen vergrößerten Ausschnitt gemäß Bereich XIII in Fig. 12.

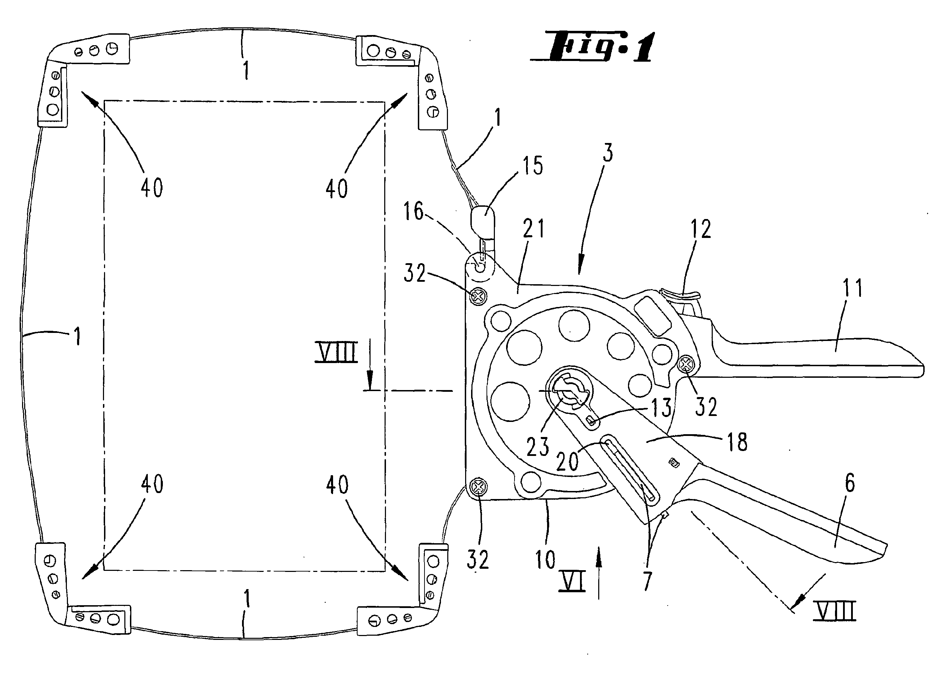

Den grundsätzlichen Aufbau des Bandspanners zeigt die Fig. 1. Der Bandspanner besitzt eine Spanneinrichtung 3, die ein Gehäuse 10 aufweist, in dem ein Wickelkörper 2 angeordnet ist. Fest mit dem Gehäuse 10 ist eine Handhabe 11 verbunden. Im Bereich der Verbindungsstelle mit dem Gehäuse ist ein Freigabehebel 12 vorgesehen. Der Treibhebel 6 besitzt gabelartig zwei Arme 18, mit denen er schwenkbar am Gehäuse 10 befestigt ist.

Das Spannband 1 ist auf dem Wickelkörper 2 aufwickelbar. Auf dem Spannband sitzen vier Spannbacken 40. Das freie Ende des Spannbandes 1 besitzt einen Haken 15, der um einen fest mit dem Gehäuse 10 verbundenen Stift 16 hakbar ist.

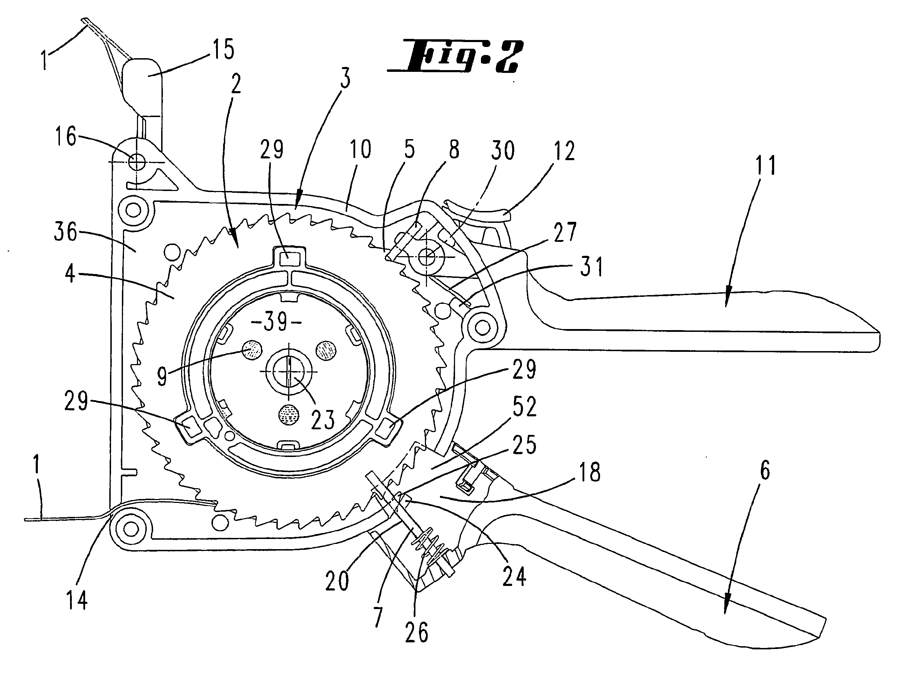

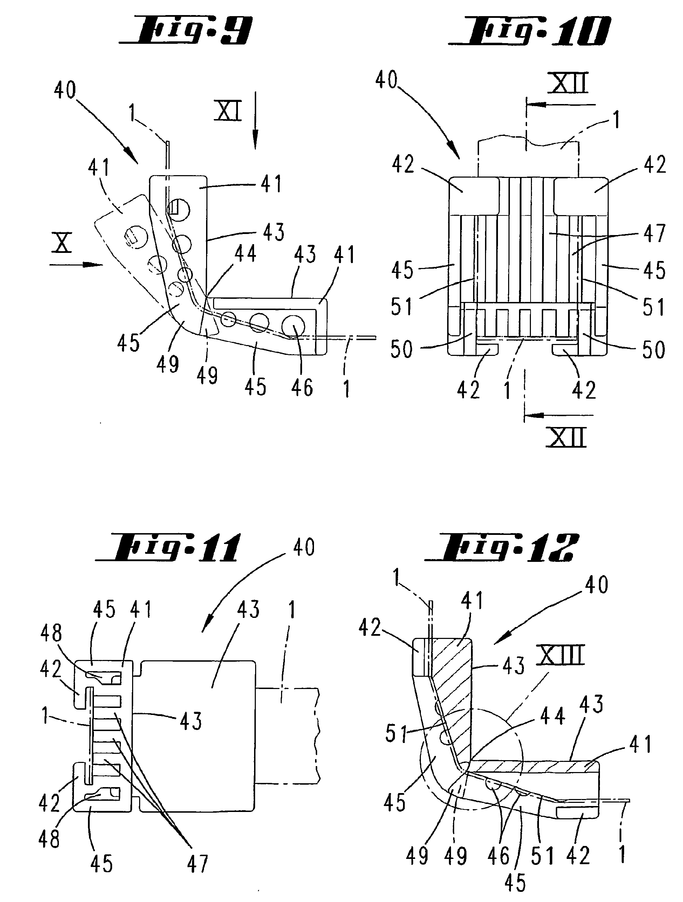

Das Eingerichte des Bandspanners ist insbesondere den Figuren 2 und 9 zu entnehmen. Der Wickelkörper 2 besteht aus Kunststoff. Er besitzt einen inneren Hohlraum 38 und ist um einen Achszapfen, der fest mit dem Boden 36 des Gehäuses 10 verbunden ist, drehbar. Der Achszapfen 23 besitzt einen Diametralschlitz. In diesem Diametralschlitz ist ein Ende 9' einer Spiralbandfeder 9 befestigt. Das andere Ende 9" der Spiralbandfeder 9 ist an der Höhlungswandung der Höhlung 38 des Wickelkörpers 2 befestigt. Außenseitig bildet der Wickelkörper 2 einen ringförmigen Speicherraum für das Band 1 auf. Der Speicherraum ist von den beiden Stirnwänden 17 des Wickelkörpers 2 flankiert.

Ist das Spannband 1 vollständig auf den Wickelkörper aufgewickelt, ist die Bandfeder 9, die unter einer Abdeckung 39 liegt, geringfügig vorgespannt. Wird das Spannband 1 von dem Wickelkörper 2 abgezogen, so ist dies mit einer Drehung des Wickelkörpers 2 verbunden. Einhergehend mit dieser Drehung wird der von der Bandfeder ausgebildete Federspeicher 9 gespannt. Dabei dreht sich der Wickelkörper 2 um den Achszapfen 23.

Beide Stirnwände 17 bilden auf ihren voneinander wegweisenden Seiten Ausnehmungen zur Aufnahme jeweils eines Sperrrades 4. Jedes Sperrrad 4 besteht aus einem Stahl-Stanz-Teil und weist außenseitig eine Sperr-Verzahnung auf. Innenseitig besitzt jedes Sperrrad 4 eine Aussparung 28, in welche formschlüssig Vorsprünge 29 der Stirnseite 17 eingreifen, um eine drehfeste Verbindung des Sperrades 4 mit dem Wickelkörper 2 zu gewährleisten. Die Sperrräder 4 können durchaus lose in den ihnen zugeordneten Aussparungen einliegen. Der Boden 36 des Gehäuses 10 bildet einen ringförmigen Distanzwulst 34 aus, auf welchem das Sperrrad 4 gleitet.

Das andere Sperrrad 4 wird vom Gehäusedeckel 21 gelagert. Der Gehäusedeckel 21 ist mittels Befestigungsschrauben 32 am Gehäuse 10 befestigt. In der Mitte bildet der Gehäusedeckel 21 eine Öffnung aus, in welche das freie Ende Achszapfens 23 ragt. Der den Achszapfen 32 umgebende Lagersockel 22 ragt bis in die Höhlung 38 des Wickelkörpers 2 ein und dient somit ebenfalls zur Drehlagerung des Wickelkörpers 2.

Der Deckel 21 besitzt darüber hinaus einen zentralen Lagerabschnitt 37 für einen Arm 18 des gabelförmigen Treibhebels 6. Der andere Arm 18 des gabelförmigen Treibhebels 6 ist um einen Lagerabschnitt 35 des Gehäusebodens schwenkbar gelagert.

Der Gehäuseboden 36 bildet in Form eines Stiftes eine Schwenkachse 30 für den Freigabehebel 12 aus. Ein Betätigungsabschnitt des Freigabehebels 12 durchragt eine Öffnung des Gehäuses, um von außen her betätigt zu werden. Wird der Betätigungsabschnitt des Freigabehebels 12 betätigt, so wird eine Sperrklinke 8 verschwenkt. Dies erfolgt gegen die Rückstellkraft einer Sperrklinkenfeder 27, die sich auf einem Widerlager 31 des Gehäuses abstützt. Im Ausführungsbeispiel wird die Sperrklinkenfeder 27 von einer Schenkelfeder ausgebildet und die Sperrklinke 8 von einem Metallstück, welches in der Sperrstellung in die Verzahnung 5 beider Sperrräder 4 eingreift. Die Sperrklinkenfeder 27 hat eine derartige Stärke, dass der Federspeicher 9 bei in der Verzahnung 5 befindlichen Sperrklinke 8 nicht in der Lage ist, den Wickelkörper 2 zu drehen. Die Sperrklinke 8 bildet somit nicht nur eine Sperre gegen Herausziehen des Bandes 1, sondern auch eine Drehhemmung.

Der Treibhebel 6 trägt eine Treibklinke 7. Die äußeren Abschnitte 7' der Treibklinke 7 sind in Langlöchern 20 der Treibhebelarme 18 gefüllt. Mit seiner Sperrkante 7" ist die Treibklinke 7 in der Lage, in die Verzahnung der Sperrräder 4 einzugreifen. Ein Verschwenken des Treibhebels 6 hat dann eine Drehung des Wickelkörpers 2 in Spannrichtung zur Folge.

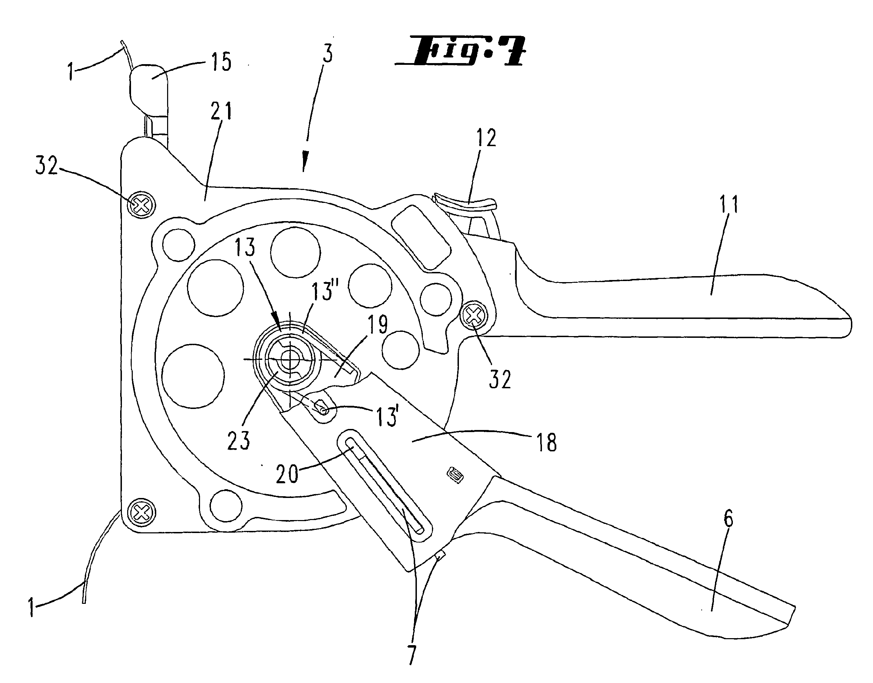

Wie die Figur 7 zeigt, wird der Treibhebel 6 mittelst einer Rückstellfeder 13 in eine von der Handhabe 11 abgespreizten Ruhestellung gehalten. Die Rückstellfeder 13 ist eine Schenkelfeder, deren Ende 13' in eine Öffnung des Treibhebelarmes 18 eingreift. Die Schenkelfeder 13 als solche liegt in einer Aussparung 19 des Gehäusedeckels. Das andere Ende 13" der Rückstellfeder 13 stützt sich an der Wandung dieser Aussparung 19 ab.

Wie der Fig. 2 zu entnehmen ist, besitzt der Rand einer Arbeitsöffnung 52 einen Steuervorsprung 25. Dieser Steuervorsprung 25 steuert eine Abwinklung 24, die eine Steuerschräge der Treibklinke 7 ausbildet derart, dass die Sperrkante 7" der Treibklinke 7 in der Ruhestellung (Fig. 2) nicht in die Verzahnung 5 des Sperrrades 4 eingreift. In der Figur 2 ist auch die Druckfeder 26 erkennbar, die die Treibklinke 7 in Richtung des Sperrrades 4 federkraftbeaufschlagt. In dieser Figur ist auch der Durchtrittsschlitz 14 für das Spannband erkennbar.

### Die Funktionsweise des Bandspanners ist die folgende:

In einer nicht dargestellten Betriebsstellung befindet sich das gesamte Spannband 1 auf dem Wickelkörper 2 aufgewickelt. Es ist aber auch möglich, dass die Ausgangsstellung die in Fig. 1 dargestellte Stellung ist, in welcher das Spannband um ein dort strichpunktiert dargestelltes Werkstück lose herumgelegt ist und der Haken 15 in den Stift 16 eingehakt ist. Die mit der Bezugsziffer 40 bezeichneten Spannbacken 40 sind an den Ecken des Werkstückes zugeordnet.

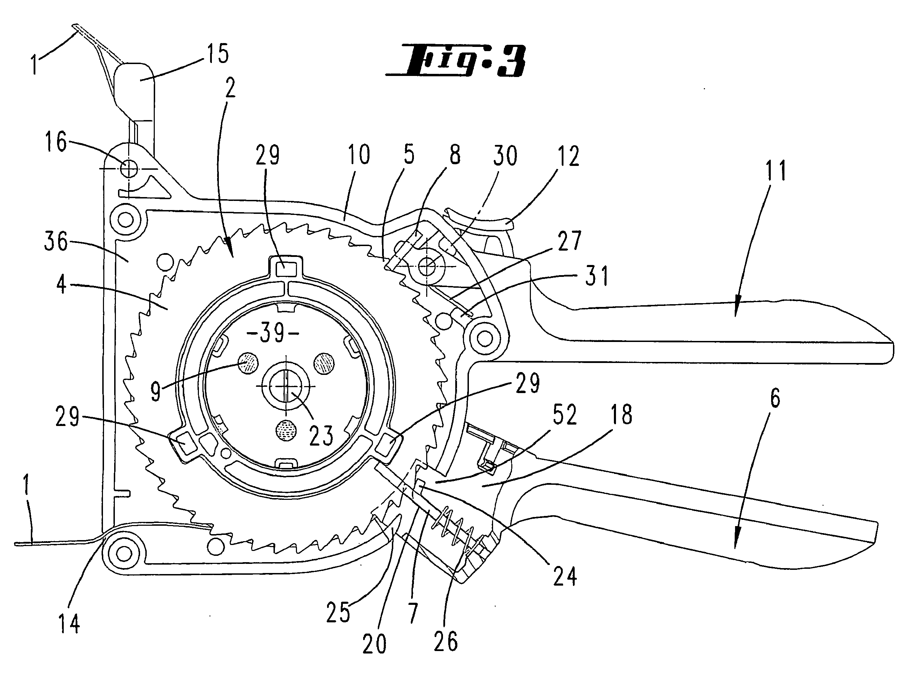

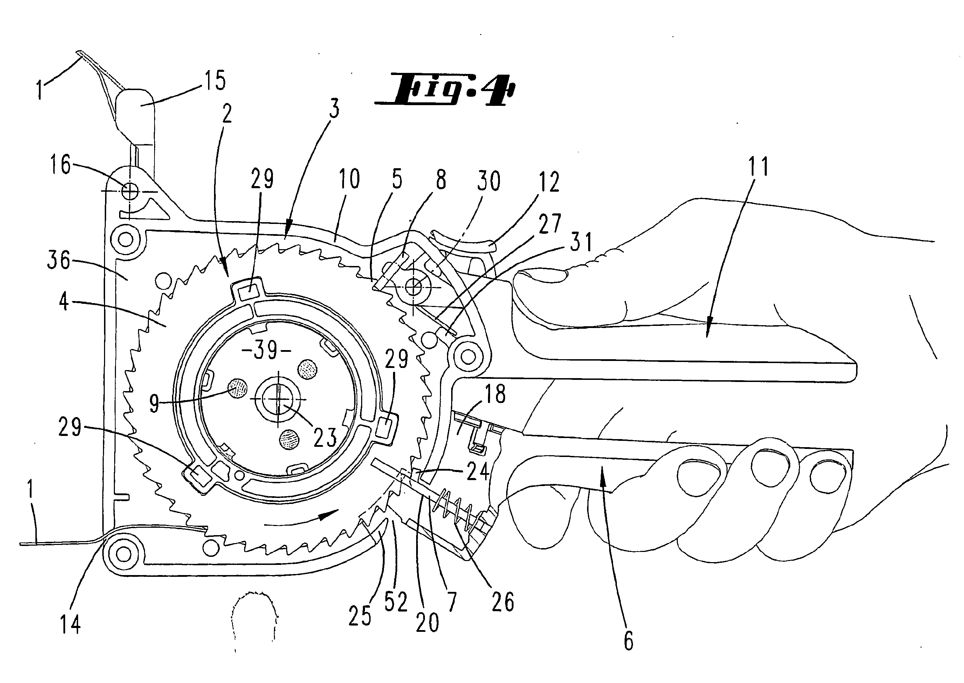

Ausgehend von dieser Funktionsstellung, in der das Sperrklinkengetriebe die in Fig. 2 dargestellte Position einnimmt, wird der Treibhebel 6 in Richtung auf die Handhabe 11 zu verlagert. Dabei rutscht die von der Abwinklung 24 ausgebildete Steuerschräge der Treibklinke vom Steuervorsprung 25. Die Druckfeder 26 verlagert die Treibklinke 7 in Richtung auf die Verzahnung derart, dass die Kante 7" in die Verzahnung 5 eingreift. Ausgehend von dieser, in der Fig. 3 dargestellten Funktionsstellung wird sodann der Treibhebel 6 weiter auf die Handhabe 11 zu verlagert, wie dies in der Fig. 4 dargestellt ist. Einhergehend damit wird der Wickelkörper 2 in Pfeilrichtung drehmitgeschleppt. Das Spannband 1 wird auf dem Wickelkörper 2 aufgewickelt unter gleichzeitiger Erhöhung der Bandspannung. Wird, nachdem der Treibhebel 6 ganz an die Handhabe 11 herangezogen ist - der Treibhebel 6 losgelassen, so sorgt die Kraft der Rückstellfeder 13 für eine Rückverlagerung des Treibhebel 6 in die in Figur 2 dargestellte Ausgangsstellung. Die Sperrklinke 8 hält dabei das Sperrrad fest. Die Kante 7" der Treibklinke 7 gleitet dabei über die Schrägflächen der Verzahnung 5.

Durch mehrfache Wiederholung dieser zuvor beschriebenen Drehbetätigung des klinkengesperrten Wickelkörpers 2 erfolgt in bekannter Weise die Bandspannung.

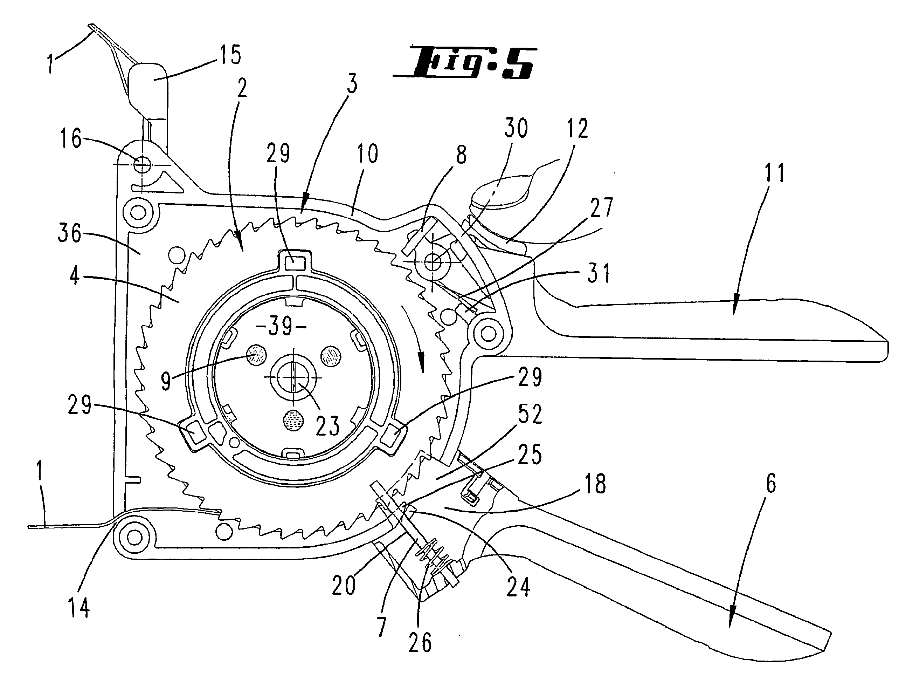

Das Lösen der Spannung erfolgt durch Druckbetätigen des Freigabehebels 12. Erfolgt dies in der in Fig. 5 dargestellten Stellung, in welcher der Steuervorsprung 25 die Treibklinke 7 aus dem Zahneingriff gesteuert hat, so kann durch Zug am Spannband 1 der Wickelkörper in der in Fig. 5 dargestellten Pfeilrichtung gedreht werden. Einhergehend mit dieser Drehung wird der Federspeicher 9 gespannt. Wird der in Fig. 5 dargestellten Betriebsstellung kein Zug auf das Spannband ausgeübt, so ist der Federspeicher 9 in der Lage, den Wickelkörper 2 entgegen der in Fig. 5 dargestellten Pfeilrichtung zu drehen, was ein selbsttätiges Aufwickeln des Spannbandes 1 auf dem Wickelkörper zur Folge hat.

In der Spannstellung kann sich eine ebene Gehäuseaußenfläche 10' am Werkstück anlegen.

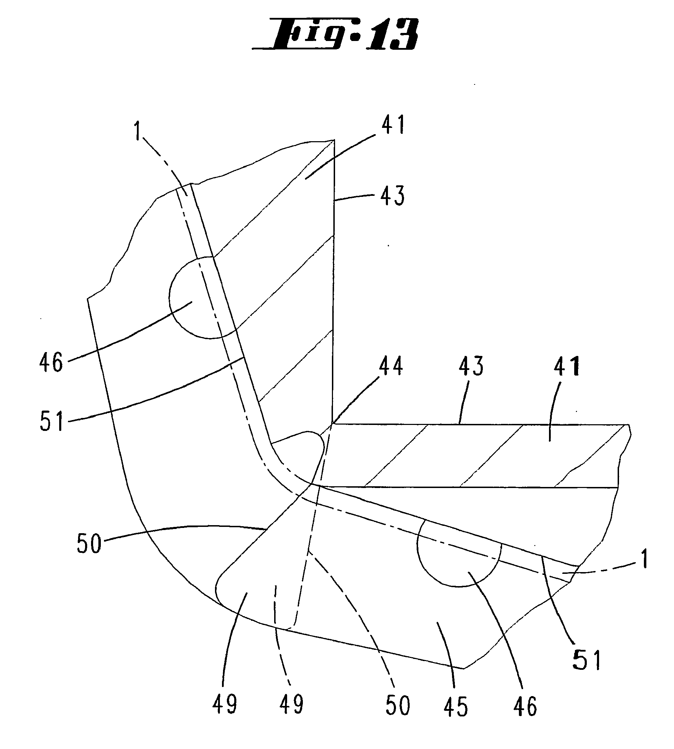

Die Figuren 9 bis 13 zeigen detailliert eine Spannbacke 40. Diese besteht aus einem Kunststoffspritzgussteil. Die Spannbacke besitzt zwei Winkelschenkel 41, die unter Ausbildung eines Filmscharnieres 44 miteinander verbunden sind. Die beiden Winkelschenkel 41 bilden schenkelinnenseitig Spannflächen 43, die von einer 90° Stellung bis in eine Gestrecktstellung zueinander bringbar sind.

Rückwärtig der Spannflächen 43 befinden sich randseitige Versteifungsrippen 45. Zwischen den beiden Versteifungsrippen 45 eines jeden Winkelschenkels 41 ist das Spannband 1 geführt. Dabei ragen von jeder Versteifungsrippe 45 Führungsstege 42 aufeinander zu, die den Randabschnitt des Bandes 1 überfangen, um das Band längsverschieblich an die Spannbacken 40 zu fesseln.

Zwischen den beiden Versteifungsrippen 45 befindet sich noch eine Vielzahl von Keilrippen 47. Diese Keilrippen gehen keilspitzenseitig vom Filmscharnier 44 aus. Auf den Keilrippen 47 ist das Spannband 1 geführt.

Die filmscharnierseitigen Enden der Versteifungsrippen 45 bilden Überlappungsabschnitte 49: Die Überlappungsabschnitte 49 bilden Anschlagkante 50 aus. In einer nicht dargestellten Betriebsstellung können die Anschlagskanten 50 bis in Anlage an Gegenanschläge 51 des jeweils anderen Winkelschenkels 41 gebracht werden. Zusätzlich besitzen die Versteifungsrippen 45 noch Öffnungen 46, die eine kreisförmige Grundrissform aufweisen und unterschiedliche Durchmesser.

Wie der Fig. 11 zu entnehmen ist, besitzen die Versteifungsrippen 45 Hohlräume 48.

## Patentansprüche

1. Bandspanner mit einem Spannband (1) und einer einen Wickelkörper (2) für das Spannband (1) aufweisenden Spanneinrichtung (3), mit einem dem Wickelkörper (2) zugeordneten gezahnten Sperrrad (4), in dessen Sperrverzahnung (5) eine einem Treibhebel (6) zugeordnete Treibklinke (7) und eine Sperrklinke (8) eingreifen, um durch wiederholendes Schwenken des Treibhebels (6) den Wickelkörper (2) richtungsgesperrt zu drehen, wobei der Wickelkörper (2) einen in Aufwickelrichtung wirkenden Federspeicher (9) aufweist und als Speicherspule im Wesentlichen die gesamte Länge des mit einem Ende fest mit dem Wickelkörper (2) verbundenen Bandes (1) aufnimmt, **dadurch gekennzeichnet, dass** der Treibhebel (6) und eine fest mit einem Spanneinrichtungsgehäuse (10) verbundene Handhabe (11) derart zangenartig einander zugeordnet sind, dass der Treibhebel (6) zum Aufbringen der Spannkraft gegen die Kraft einer Rückstellfeder (13) in Richtung auf die Handhabe (11) verlagerbar ist.

2. Bandspanner nach Anspruch 1, **gekennzeichnet durch** einen insbesondere der Handhabe (11) zugeordneten Freigabehebel (12) zum Lösen der Sperrklinke (8).

3. Bandspanner nach einem der vorhergehenden Ansprüche, **dadurch gekennzeichnet, dass** der Treibhebel (6) in der Ruhestellung des Treibhebels außer Eingriff der Sperrzähne (5) liegt.

4. Bandspanner nach einem der Ansprüche 2-3, **dadurch gekennzeichnet, dass** der Federspeicher (9) in der Lage ist, bei in der Ruhestellung liegendem Treibhebel (6) und in Freigabestellung gebrachtem Freigabehebel (12) das Band (1) selbsttätig aufzuwickeln.

5. Bandspanner nach einem der vorgehenden Ansprüche, **dadurch gekennzeichnet, dass** der Wickelkörper (2) aus Kunststoff besteht und in einem allseitig geschlossenen Gehäuse (10) angeordnet ist, welches lediglich einen Durchtrittsschlitz (14) für das Spannband und ggf. Arbeitsöffnungen (52) für die Treibklinke (7) und den Freigabehebel (12) aufweist.

6. Bandspanner nach einem der vorgehenden Ansprüche, **dadurch gekennzeichnet, dass** das freie Ende des Spannbandes einen Haken (15) aufweist, zum Einhaken an das Spanneinrichtungsgehäuse (10).

7. Bandspanner nach einem der vorgehenden Ansprüche, **dadurch gekennzeichnet, dass** das Sperrrad (4) von einem ringförmigen Metallstanzteil ausgebildet ist, welches formschlüssig in der Stirnwand (17) des Wickelkörpers (2) einliegt.

8. Bandspanner nach einem der vorgehenden Ansprüche, **dadurch gekennzeichnet, dass** der Treibhebel (6) gabelförmige Arme (18) hat, die gehäuseaußenseitig am Gehäuse (10) angelenkt sind.

## Claims

1. Strap tensioner having a tensioning strap (1) and a tensioning device (3) with a winding body (2) for the tensioning strap (1), having a toothed locking wheel (4) which is associated with the winding body (2) and in the locking toothing arrangement (5) of which a driving pawl (7), associated with a driving lever (6), and a locking pawl (8) engage, in order, by way of repeated pivoting of the driving lever (6), to rotate the winding body (2) with directional locking, it being the case that the winding body (2) has a spring accumulator (9) acting in the winding-up direction and, as a storage reel, accommodates substantially the entire length of the strap (1), which has one end connected fixedly to the winding body (2), **characterized in that** the driving lever (6) and a handle (11), which is connected fixedly to a tensioning-device housing (10), are associated with one another there in a tong-like manner, and **in that** the driving lever (6), for the purpose of applying the tensioning force, can be displaced in the direction of the handle (11) counter to the force of a restoring spring (13).

2. Strap tensioner according to Claim 1, **characterized by** a release lever (12) which is associated, in particular, with the handle (11) and is intended for releasing the locking pawl (8).

3. Strap tensioner according to either of the preceding claims, **characterized in that** the driving lever (6), in the rest position of the driving lever, is not in engagement with the locking teeth (5).

4. Strap tensioner according to either of Claims 2 and 3, **characterized in that** the spring accumulator (9) is capable of winding up the strap (1) automatically when the driving lever (6) is located in the rest position and the release lever (12) is brought into the release position.

5. Strap tensioner according to any of the preceding claims, **characterized in that** the winding body (2) consists of plastics material and is disposed in a housing (10) which is closed all the way round and merely has a through-passage slot (14) for the tensioning strap and, if appropriate, operating openings (52) for the driving pawl (7) and the release lever (12).

6. Strap tensioner according to any of the preceding claims, **characterized in that** the free end of the tensioning strap has a hook (15) for hooking into the tensioning-device housing (10).

7. Strap tensioner according to any of the preceding claims, **characterized in that** the locking wheel (4) is formed by an annular punched metal part which is positioned in a form-fitting manner in the end wall (17) of the winding body (2).

8. Strap tensioner according to any of the preceding claims, **characterized in that** the driving lever (6) has fork-like arms (18) which are articulated on the outside of the housing (10).

## Revendications

1. Dispositif de serrage de bande avec une bande de serrage (1) et un dispositif de serrage (3) présentant une bobine (2) pour la bande de serrage (1), avec une roue à cliquet dentée (4) associée à la bobine (2), dans la denture d'arrêt (5) de laquelle s'engagent un cliquet moteur (7) associé à un levier moteur (6) et un cliquet d'arrêt (8) afin de faire tourner la bobine (2) de façon verrouillée en direction par un pivotement répété du levier moteur (6), dans lequel la bobine (2) présente un accumulateur à ressort (9) agissant dans la direction d'enroulement et reçoit en tant que bobine de stockage substantiellement toute la longueur de la bande (1) reliée par une extrémité solidement à la bobine (2), **caractérisé en ce que** le levier moteur (6) et une manette (11) reliée solidement à un boîtier de dispositif de serrage (10) sont associés l'un à l'autre à la manière d'une pince de telle sorte que le levier moteur (6) peut être décalé en direction de la manette (11) pour exercer la force de serrage contre la force d'un ressort de rappel (13).

2. Dispositif de serrage de bande selon la revendication 1, **caractérisé par** un levier de déblocage (12) associé en particulier à la manette (11) pour le déblocage du cliquet d'arrêt (8).

3. Dispositif de serrage de bande selon l'une quelconque des revendications précédentes, **caractérisé en ce que** le levier moteur (6) se trouve dans la position de repos du levier moteur hors prise avec les dents d'arrêt (5).

4. Dispositif de serrage de bande selon l'une quelconque des revendications 2 à 3, **caractérisé en ce que** lorsque le levier moteur (6) se trouve dans la position de repos et le levier de déblocage (12) a été amené dans la position de déblocage, l'accumulateur à ressort (9) est capable d'enrouler la bande (1) automatiquement.

5. Dispositif de serrage de bande selon l'une quelconque des revendications précédentes, **caractérisé en ce que** la bobine (2) se compose de matière plastique et est disposée dans un boîtier (10) fermé sur tous les côtés qui présente simplement une fente de passage (14) pour la bande de serrage et éventuellement des ouvertures de travail (52) pour le cliquet moteur (7) et le levier de déblocage (12).

6. Dispositif de serrage de bande selon l'une quelconque des revendications précédentes, **caractérisé en ce que** l'extrémité libre de la bande de serrage présente un crochet (15) pour l'accrochage au boîtier de dispositif de serrage (10).

7. Dispositif de serrage de bande selon l'une quelconque des revendications précédentes, **caractérisé en ce que** la roue à cliquet (4) est réalisée par une pièce découpée métallique annulaire qui s'adapte par complémentarité de forme dans la paroi frontale (17) de la bobine (2).

8. Dispositif de serrage de bande selon l'une quelconque des revendications précédentes, **caractérisé en ce que** le levier moteur (6) présente des bras fourchus (18) qui sont articulés sur le boîtier (10) à l'extérieur de celui-ci.
